# EUROPÄISCHE PATENTSCHRIFT

(11) **EP 1 997 623 B1**
(45) Veröffentlichungstag und Bekanntmachung des Hinweises auf die Patenterteilung: **22.06.2011**
(21) Anmeldenummer: 08009696.9
(22) Anmeldetag: 28.05.2008
(51) Int. Cl.: B32B 21/00, B44C 5/04, E04F 15/02

(54) **Holzwerkstoffplatte und Verfahren zur Herstellung**
Composite wood board and method for its manufacture
Plaque en bois et procédé de fabrication

(30) Priorität: 30.05.2007 DE 102007025135
(43) Veröffentlichungstag der Anmeldung: 03.12.2008
(73) Patentinhaber: Flooring Technologies Ltd., Pieta MSD 08 (MT)
(72) Erfinder:
(74) Vertreter: Rehmann, Thorsten

(56) Entgegenhaltungen:
- WO-A-00/44576
- WO-A1-01/48333
- DE-A1- 19 532 819
- DE-A1-102004 032 058
- DE-A1-102005 051 756
- DE-U1- 29 917 947

## Beschreibung

Die Erfindung betrifft eine Holzwerkstoffplatte, insbesondere ein Fußbodenpaneel,mit einem Kern aus Holzwerkstoff, insbesondere MDF oder HDF, oder einem Holzwerkstoff-Kunststoff-Gemisch, dessen Oberseite eine Dekorschicht aufweist, die von einer transparenten Harzschicht abgedeckt ist, und die Harzschicht zur Erhöhung der Abriebfestigkeit Partikel mit einer hohen Festigkeit, beispielsweise Korund, und zusätzlich pyrogene Kieselsäure in einer Partikelgröße von bis zu 100 nm enthält. Die Holzwerkstoffplatte und das Verfahren zu dessen Herstellung können auch für andere Produktgruppen eingesetzt werden, beispielsweise für Arbeitsplatten oder Möbelfronten mit einer Melaminoberfläche.

Eine Holzwerkstoffplatte mit Kern und Dekorschicht ist beispielsweise aus der WO 01/48333A1 bekannt. Diese weist eine abriebfeste Schicht auf, die Hartstoffpartikel mit einer durchschnittlichen Größe im Bereich von 50nm - 150 μm enthält. die Hartstoffpartikel können aus Siliciumoxid, Siliciumcarbid, α-Aluminiumoxid, Diamant o. ä. bestehen.

Eine ähnliche Holzwerkstoffplatte ist beispielsweise aus der DE 10 2004 011 531 B3 oder der DE 10 2004 032 058 A1 bekannt. Um dem Abrieb der Deckschicht beim Begehen des Fußbodens, der aus solchen Holzwerkstoffplatten zusammengesetzt ist, entgegen zu wirken, sind in der Deckschicht Korundpartikel eingelagert.

Aus der WO 2005/042644 A1 ist ein Dekorpapier mit aufgestreutem Harz mit einem mit Haftvermittler beschichteten Korund bekannt. Die Verschleißschutzschicht schützt das Dekor, sie ist aber kratzanfällig. Wird der Fußboden mit Schuhen betreten, in deren Laufsohle sich Sand bzw. kleine Steine festgesetzt haben, entstehen Kratzer, die je nach Lichteinfall mehr oder weniger deutlich sichtbar werden. Eine solche Beanspruchung des Fußbodens ist im Grunde genommen unvermeidbar. Im Laufe der Zeit entstehen mehr und mehr Kratzer, die sich im Eingangsbereich eines Zimmers als so genannte Laufstraßen bemerkbar machen. Der Fußboden sieht abgenutzt aus, obwohl die Verschleißschutzschicht an sich intakt ist, aber an Glanz verloren hat.

Aus der DE 20 2004 003 061 I1 ist ein Dekorpapier mit elektrisch geladenen Fasern bekannt, das eine abriebfeste Beschichtung aufweist. Die Fasern sind auf oder an der abriebfesten Beschichtung angebracht. Die abriebfesten Partikel werden aufgestreut. Sie bestehen aus Korund mit einem Durchmesser von 90 bis 130 µm.

Von dieser Problemstellung ausgehend soll die eingangs beschriebene Holzwerkstoffplatte dahingehend verbessert werden, dass sich die Kratzfestigkeit ihrer Deckschicht erhöht.

Zur Problemlösung zeichnet sich eine gattungsgemäße Holzwerkstoffplatte dadurch aus, dass die minimale Partikelgröße der Partikel pyrogener Kieselsäure 1 nm beträgt, dass die Partikelgröße der Partikel pyrogener Kieselsäure durchschnittlich 40 nm beträgt und dass die Menge der Partikel pyrogener Kieselsäure 0,5 bis 10 g/m² beträgt und die transparente Kunstharzschicht ein Melaminharz ist.

Dadurch dass die Partikelgröße sehr klein ist können viele Partikel nebeneinander in der Harzschicht angeordnet werden. Die verbleibenden Zwischenräume zwischen den Partikeln sind wesentlich kleiner als kleine Sandkörner, die sich in den Schuhen festsetzen können. Feine Kratzer, die den Glanz der Oberfläche beeinträchtigen können, können folglich nicht entstehen.

Die Dekorschicht kann eine bedruckte, harzgetränkte Papierlage sein oder direkt auf die Oberseite des Kerns aufgedruckt bzw. aufgewalzt werden.

Die Beschichtung der Holzwerkstoffplatte erfolgt durch folgende Schritte:
a) Aufbringen der Dekorschicht auf die Oberseite des Kerns;
b) Aufbringen mindestens einer Harzschicht aus Melaminharz mit Partikeln aus einem abriebfesten Material;
c) Aufstreuen von Partikeln pyrogener Kieselsäure in einer Größe von 1 bis 100 nm und durchschnittlich 40 nm in einer Menge von 0,5 bis 10 g/m² auf die noch feuchte mindestens eine Harzschicht;
d) Trocknen der Harzschicht;
e) Abdecken der Partikel von pyrogener Kieselsäure mit einem Harzdeckstrich;
f) Verpressen unter Druck- und Temperatureinfluss.

Durch das Aufstreuen der Partikel von pyrogener Kieselsäure auf die noch feuchte Harzschicht wird eine reine Oberflächenbeschichtung gewährleistet.

Der Harzdeckstrich, mit dem die Kieselsäure-Partikel nach dem Aufstreuen abgedeckt werden, soll dazu dienen, dass die feinen Partikel sich bei der weiteren Bearbeitung bzw. Behandlung der Holzwerkstoffplatte nicht lösen können. Der Harzdeckstrich kann als dünner Harzfilm aufgesprüht werden. Die Dicke des Harzdeckstriches muss so dünn gewählt werden, dass sich beim anschließenden Verpressen dieses Harz durch die Temperatureinwirkung aufschmilzt und sich zwischen den Kieselsäure-Partikel einlagert. Hier hat sich herausgestellt, dass eine Menge von 10 bis 20 g/m² für den Harzdeckstrich ausreichend sind.

Bei dem Aufbringen der Kieselsäure ist es besonders wichtig, dass Luftbewegungen vermieden werden, weil dies die Verteilung der Nanopartikel verschlechtern könnte und im ungünstigsten Fall zu einer Fleckigkeit der fertigen Oberfläche führt.

Eine Streueinrichtung, die geeignet ist, die feinen Partikel aufzustreuen, wird von der Firma TechnoPartner Samtronic GmbH, D-73037 Göppingen vertrieben.

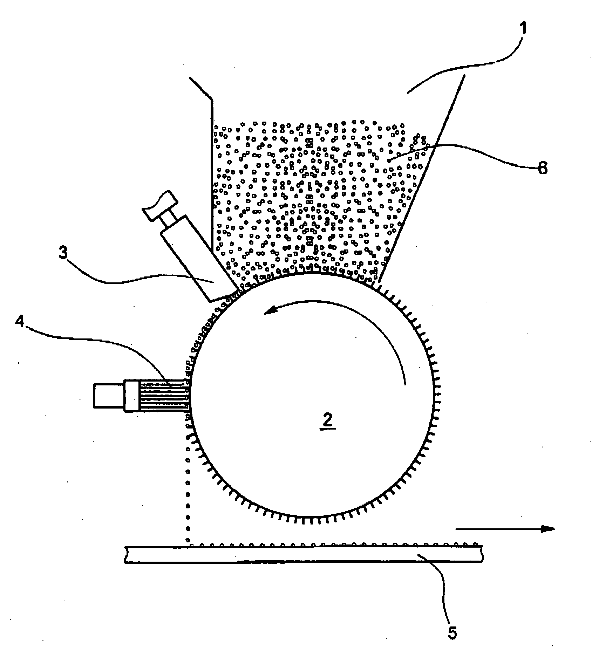

In der Figur ist das Funktionsprinzip der Streumaschine mit einem oszillierenden Bürstsystem dargestellt. Die Kieselsäure-Partikel 6 werden mit Saug- oder Schneckenfördergeräten dem trichterförmigen Aufgabetrog 1 zugeführt. Im Aufgabetrog 1 werden die Partikel 6 gleichmäßig verteilt, und der Füllstand wird während der Aufstreuvorganges konstant gehalten. Ein spezieller Mischer im Aufgabetrog 1 verhindert Hohlraumbildung und Separation der Kieselsäure-Partikel. An der Unterseite des Aufgabetrogs 1 befindet sich eine rotierende mit Poren oder Zellen versehene Dosierwalze 2. Die Zeltengröße der Dosierwalze 2 wird entsprechend der Partikelgröße der Kieselsäure ausgewählt. Von der Dosierwalze 2 werden die Kieselsäure-Partikel 6 aufgenommen und an einem flexiblen Rakelmesser 3 abgestreift. Die so genau dosierten Kleselsäure-Partikel 6 werden dann von der Dosierwalze 2 zu einer oszillierenden Ausbürsteinrichtung 4 befördert. Durch das Ausbürsten der Partikel 6 aus den Zellen der Dosierwalze 2 wird die Kieselsäure kontrolliert auf die unter der Dosierwalze 2 hindurch geförderte Holzwerkstoffplatte 5 übertragen und lagert sich dort zwischen den wesentlich größeren Korundpartikel ein.

Es ist selbstverständlich, dass auch mehrere Harzschichten auf dem Kern vorgesehen sein können. Wichtig ist, dass die Kieselsäure-Partikel in die oberste und noch feuchte Harzschicht eingestreut werden. Durch das anschließende Trocknen des Imprägnats werden sie hierin fixiert.

Erfindungswesentlich ist es, dass die Kieselsäure-Partikel aufgestreut werden. Es hat sich herausgestellt, dass bei der Zugabe von pyrogener Kieselsäure zu Tränkharzen verschieden Probleme auftreten können, die das Verfahren sehr kompliziert und störanfällig machen können. Selbst bei Zugabe kleinster Mengen pyrogener Kieselsäure steigt die Viskosität des Harzes deutlich an. Schon bei einer Tränkflotte mit 5 % pyrogener Kieselsäure konnte eine Verdopplung der Viskosität festgestellt werden. Eine homogene Dispersion mit Partikeln, die eine durchschnittliche Größe von 40 nm aufweisen, ist technisch schwierig zu bewältigen, weil die Partikel in der Harzlösung zum Agglomerieren bzw. Verklumpen neigen. Außerdem verändert sich der pH-Wert nach dem Zufügen der Kieselsäure-Partikel in den sauren Bereich. Eine wässrige Dispersion mit einem Feststoffgehalt von ca. 4 % besitzt einen pH-Wert von ca. 3.8 bis 4,8. Das beeinflusst die Standzeit der Imprägnierflotte negativ. Zwar können diese Probleme reduziert werden, wenn die Temperatur der Harzflotte erhöht wird, weil dadurch der Viskositätsanstieg wieder reduziert wird oder der Anteil der zugesetzten pyrogenen Kieselsäure-Partikel einfach verringert wird. Damit ist dann aber nicht die gewünschte Kratzfestigkeit erzielbar. Wenn die pyrogenen Kieselsäure-Partikel der Tränkharzflotte zugegeben werden, werden damit alle Bereiche des resultierenden Imprägnates gleichmäßig mit dem Mineralstoff beschichtet. Dies ist aber an sich nicht gewünscht und kann die Haftung auf dem Trägermaterial oder einem anderen Imprägnat oder auch die Transparenz negativ beeinflussen. Aus diesem Grunde ist die reine Oberflächenbeschichtung erstrebenswert.

Wenn die Dekorschicht nicht durch eine Papierlage gebildet wird, sondern direkt auf die Oberseite der Holzwerkstoffplatte aufgedruckt wird, wird die Oberseite der Holzwerkstoffplatte zunächst geschliffen und mit einem Melaminharzauftrag grundiert, Dann wird mindestens eine Farbschicht zum Dekorieren aufgebracht und getrocknet. Anschließend wird die Farbschicht mit Melaminharz versiegelt. In dieser versiegelnden Harzschicht können Korundpartikel eingemischt sein oder auf diese aufgestreut bzw. aufgesprüht werden. Anschließend werden die pyrogenen Kieselsäure-Partikel auf die noch feuchte Versiegelungsschicht aufgebürstet und dieser Aufbau dann getrocknet. Optional kann dann nochmals ein dünner Harzdeckstrich (Film) aufgebracht werden.

Eine erfindungsgemäß hergestellte Holzwerkstoffplatte zeigte bei der Prüfung der Mikrokratzfestigkeit nach Martindale nach fünf Zyklen, nach denen die Glanzgradänderung bestimmt wird, überhaupt keinen Glanzverlust. Die Einstufung des Kratzbildes, die nach 10 Zyklen erfolgt, zeigt nur geringe, eben erkennbare Kratzer. Bei dem Prüfverfahren nach Martindale wird die Oberfläche mit einem Scotch-Brite-Reibmaterial beansprucht.

## Patentansprüche

1. Holzwerkstoffplatte, insbesondere Fußbodenpaneel, mit einem Kern aus Holzwerkstoff oder Holzwerkstoff-Kunststoff-Gemisch, dessen Oberseite eine Dekorschicht aufweist, die von einer transparenten Harzschicht abgedeckt ist, die zur Erhöhung der Abriebfestigkeit Partikel mit einer hohen Festigkeit, beispielsweise Korund, und zusätzlich pyrogene Kieselsäure in einer Partikelgröße von bis zu 100 nm enthält, **dadurch gekennzeichnet, dass** die minimale Partikelgröße der Partikel pyrogener Kieselsäure 1 nm beträgt, dass die Partikelgröße der Partikel pyrogener Kieselsäure durchschnittlich 40 nm beträgt und dass die Menge der Partikel pyrogener Kieselsäure 0,5 bis 10 g/m² beträgt und die transparente Kunstharzschicht ein Melaminharz ist.

2. Holzwerkstoffplatte nach Anspruch 1, **dadurch gekennzeichnet, dass** die Dekorschicht eine bedruckte Papierlage ist.

3. Holzwerkstoffplatte nach Anspruch 1, **dadurch gekennzeichnet, dass** die Dekorschicht als mindestens eine direkt aufgetragene Farbschicht ausgebildet ist.

4. Verfahren zum Herstellen einer Holzwerkstoffplatte mit einem Kern aus einem Holzwerkstoff, insbesondere MDF oder HDF, oder einem Holzwerkstoff-Kunststoff-Gemisch, mit folgenden Schritten:
a) Aufbringen der Dekorschicht auf die Oberseite es Kerns;
b) Aufbringen mindestens einer Harzschicht aus Melaminharz mit Partikeln aus einem abriebfesten Material;
c) Aufstreuen von Partikeln pyrogener Kieselsäure in einer Größe von 1 bis 100 nm und durchschnittlich 40 nm in einer Menge von 0,5 bis 10 g/m² auf die noch feuchte mindestens eine Harzschicht;
d) Trocknen der Harzschicht;
e) Abdecken der Partikel von pyrogener Kieselsäure mit einem Harzdeckstrich;
f) Verpressen unter Druck- und Temperatureinfluss.

5. Verfahren nach Anspruch 4, **dadurch gekennzeichnet, dass** nach dem Abdecken der Partikel mit einem Harzdeckstrich eine weitere Harzschicht aufgetragen wird.

6. Verfahren nach Anspruch 4 oder 5, **dadurch gekennzeichnet, dass** die Menge des Harzes im Harzdeckstrich 10 bis 20 g/m² beträgt.

7. Verfahren nach Anspruch 4, **dadurch gekennzeichnet, dass** zum Aufstreuen der Partikel eine Streu- oder Rieselapparatur verwendet wird, bei der die Partikel aus einem Vorratsbehälter in Zwischenräume zwischen Borsten einer rotierenden, gummierten, mit Borsten versehenen Walze rieseln, und aus diesen Zwischenräumen mit einer senkrecht zur Rotation der Walze oszillierenden Bürste herausgebürstet werden.

## Claims

1. Wood-based material board, in particular floor panel, with a core made of wood-based material or a wood-based material/plastics material mixture, the upper side of which has a decoration layer, which is covered by a transparent resin layer, which, to increase the abrasion resistance, contains particles with a high strength, for example corundum, and additionally pyrogenic silicon dioxide in a particle size of up to 100 nm, **characterised in that** the minimum particle size of the particles of pyrogenic silicon dioxide is 1 nm, **in that** the particle size of the particles of pyrogenic silicon dioxide is 40 nm on average and **in that** the quantity of particles of pyrogenic silicon dioxide is 0.5 to 10 g/m² and the transparent synthetic resin layer is a melamine resin.

2. Wood-based material board according to claim 1, **characterised in that** the decoration layer is a printed paper layer.

3. Wood-based material board according to claim 1, **characterised in that** the decoration layer is configured as at least one directly applied colour layer.

4. Method for producing a wood-based material board with a core made of a wood-based material, in particular MDF or HDF, or a wood-based material/plastics material mixture, having the following steps:
a) applying the decoration layer to the upper side of the core;
b) applying at least one resin layer made of melamine resin with particles of an abrasion resistant material;
c) scattering particles of pyrogenic silicon dioxide in a size of 1 to 100 nm and 40 nm on average in a quantity of 0.5 to 10 g/m² onto the still moist at least one resin layer;
d) drying the resin layer;
e) covering the particles of pyrogenic silicon dioxide with a resin covering coat;
f) pressing under the influence of pressure and temperature.

5. Method according to claim 4, **characterised in that** after the particles have been covered with a resin covering coat a further resin layer is applied.

6. Method according to claim 4 or 5, **characterised in that** the quantity of resin in the resin covering coat is 10 to 20 g/m².

7. Method according to claim 4, **characterised in that** to scatter the particles, a scattering or trickling apparatus is used, in which the particles trickle out of a storage container into gaps between the bristles of a rotating, rubberised roller provided with bristles, and are brushed out of these gaps with a brush oscillating perpendicular to the rotation of the roller.

## Revendications

1. Panneau en matériau dérivé du bois, en particulier panneau de plancher, comprenant une âme en matériau dérivé du bois ou un mélange de matière synthétique et de matériau dérivé du bois, âme dont la face supérieure présente une couche de décor qui est recouverte d'une couche de résine transparente qui contient, pour augmenter la résistance à l'usure, des particules ayant une grande résistance, par exemple du corindon, et en outre de la silice pyrogène avec une taille de particule allant jusqu'à 100 nm, **caractérisé en ce que** la taille minimale des particules de silice pyrogène s'élève à 1 nm, **en ce que** la taille de particule des particules de silice pyrogène s'élève en moyenne à 40 nm et **en ce que** la quantité de particules de silice pyrogène va de 0,5 à 10 g/m² et la couche de résine synthétique est une résine de mélamine.

2. Panneau en matériau dérivé du bois selon la revendication 1, **caractérisé en ce que** la couche de décor est une couche de papier imprimée.

3. Panneau en matériau dérivé du bois selon la revendication 1, **caractérisé en ce que** la couche de décor est formée par au moins une couche de couleur apportée directement.

4. Procédé pour fabriquer un panneau en matériau dérivé du bois ayant une âme en matériau dérivé du bois, en particulier du MDF ou du HDF, ou un mélange de matériau synthétique et de matériau dérivé du bois, comprenant les étapes suivantes :
a) apport de la couche de décor sur la face supérieure de l'âme ;
b) apport d'au moins une couche de résine en résine de mélamine comprenant des particules en un matériau résistant à l'usure ;
c) dissémination de particules de silice pyrogène d'une taille allant de 1 à 100 nm, et en moyenne 40 nm, dans une quantité allant de 0,5 à 10 g/m², sur l'au moins une couche de résine encore humide ;
d) séchage de la couche de résine ;
e) recouvrement des particules de silice pyrogène avec une couche de recouvrement en résine ;
f) pressage sous influence de la température et de la pression.

5. Procédé selon la revendication 4, **caractérisé en ce qu'**après le recouvrement des particules avec une couche de recouvrement en résine, on apporte une autre couche de résine.

6. Procédé selon la revendication 4 ou 5, **caractérisé en ce que** la quantité de résine dans la couche de recouvrement en résine va de 10 à 20 g/m².

7. Procédé selon la revendication 4, **caractérisé en ce que** pour éparpiller les particules, on utilise un appareil d'éparpillement ou d'arrosage, dans lequel les particules s'écoulent d'un réservoir dans des espaces intermédiaires entre des poils d'un rouleau caoutchouté rotatif muni de poils, et sont balayées hors de ces espaces intermédiaires avec un balai oscillant perpendiculairement à la rotation du rouleau.
